# EUROPEAN PATENT APPLICATION

(11) **EP 2 006 552 A1**
(43) Date of publication of application: **24.12.2008**
(21) Application number: 07012132.2
(22) Date of filing: 21.06.2007
(51) Int. Cl.: F16B 25/00

(54) **Screw**

(71) Applicant: Easylink Industrial Co., Ltd., Kaohsiung (TW)
(72) Inventor: Tsau,Tian-Fu, Kaohsiung,Taiwan,R.O.C. (TW)
(74) Representative: Köhler, Walter

(57) **Abstract**

A screw includes a shank (3), a first and second thread part (4) extending helically on a circumference of the shank, and a second thread part (42) extending helically on the circumference of the shank between the head and the first thread part. The first thread part (41) includes a first flank (411) facing the head and a second flank (412) facing away from the head and intersecting the first flank at a ridge, wherein the first thread part comprises a plurality of blade sections (413) and rectilinear chamfered sections (414) disposed alternately along an outer edge of the first thread part.

## Description

### BACKGROUND OF THE INVENTION

### 1. Field of the Invention

The present invention relates to a screw and, more particularly, to a screw including a shank and a threaded portion formed on the shank and including two thread parts one of which is configured to allow easy screwing of the shank into an object.

### 2. Description of Related Art

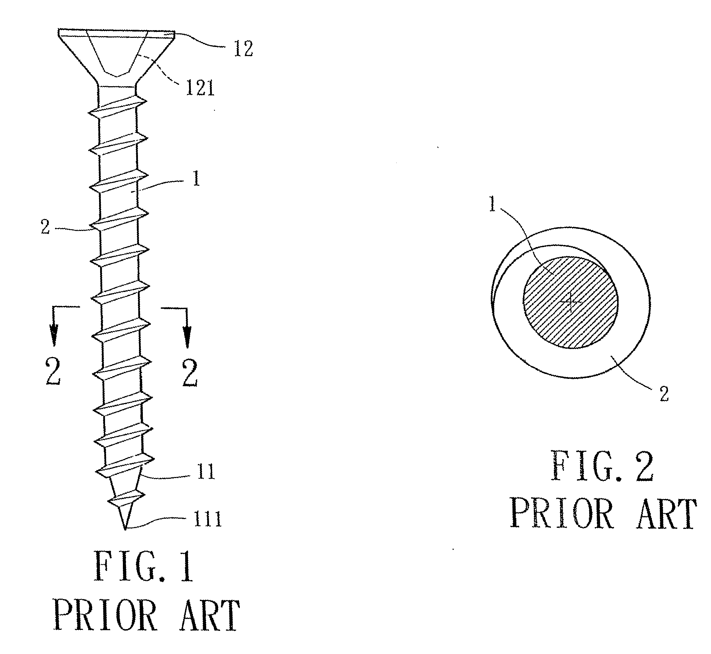

Figs. 1 and 2 illustrate a typical screw including a shank 1 and a threaded portion 2. The shank 1 is substantially cylindrical and has a bottom end processed to form a conic portion 11 with a point 111. A head 12 is formed on the other end of the shank 1 and has a groove 121 in a top face thereof for coupling with a tool (not shown) such as a screwdriver or the like. The shank 1 rotates when the tool is turned. The threaded portion 2 is a continuous thread that helically extends around a circumference of the shank 1 and that is a circle in an end view from the point 111. The threaded portion 2 assists in screwing of the shank 1 into an object (not shown) such as a wooden board. An angle between upper and lower flanks of the threaded portion2 is substantially 60°.

With references to Figs. 1 and 2, in use, the point 111 of the shank 1 is pressed against a surface of an object and a tool is coupled with the groove 121 of the head 12 and then turned to drive the point 111 into the object. After the point 111 has entered the object for a certain distance, the front end of the threaded portion 2 comes in contact with and then enters the object for screwing or tightening purposes.

However, the angle between the upper and lower flanks of the threaded portion 2 is too large such that the resistance encountered during screwing of the threaded portion 2 is relatively large, for the contact area between the peripheral arc portion of the threaded portion 2 and the object is large. Large torque and longer time are required for screwing. Furthermore, excessive force for overcoming the resistance may cause skew of the shank 1 or damage to the object.

### OBJECTS OF THE INVENTION

An object of the present invention is to provide a screw including a shank and first and second thread parts, wherein the first thread part includes a plurality of rectilinear chamfered sections to enhance screwing efficiency and to prolong the life of the screw.

Another object of the present invention is to provide a screw including a shank and first and second thread parts, wherein the first thread part is adjacent to a conic section of the shank and wherein an angle between two flanks of the first thread part is smaller than that of between two flanks of the second thread part to thereby enhance screwing efficiency.

### SUMMARY OF THE INVENTION

A screw according to the preferred teachings of the present invention includes a shank having a conic section on a first end thereof and a head formed on a second end thereof. A first thread part extends helically on a circumference of the shank and adjacent to the conic section. The first thread part includes a first flank facing the head and a second flank facing away from the head and intersecting the first flank at a ridge extending helically with the first thread part comprising a plurality of blade sections and rectilinear chamfered sections disposed alternately along an outer edge of the first thread part. A second thread part extends helically on the circumference of the shank between the head and the first thread part.

Preferably, each of two ends of each rectilinear chamfered section includes two acutely angled sides meeting an apex that is located at one end of the blade sections. The apexes are sharp to reduce resistance during screwing, thereby enhancing screwing efficiency.

Preferably, the first and second thread parts form a threaded portion having a uniform pitch.

Preferably, the second thread part includes two flanks having an angle therebetween that is different from that between the first and second flanks of the first thread part.

Other objects, advantages and novel features of this invention will become more apparent from the following detailed description when taken in conjunction with the accompanying drawings.

### BRIEF DESCRIPTION OF THE DRAWINGS

Fig. 1 is an elevational view of a conventional screw;
Fig. 2 is a sectional view taken along plane 2-2 of Fig. 1;
Fig. 3 is a perspective view of a screw according to the preferred teachings of the present invention;
Fig. 4 is a sectional view taken along plane 4-4 of Fig. 3; and
Fig. 5 is an enlarged view of a circled portion in Fig. 3.

### DETAILED DESCRIPTION OF THE PREFERRED EMBODIMENTS

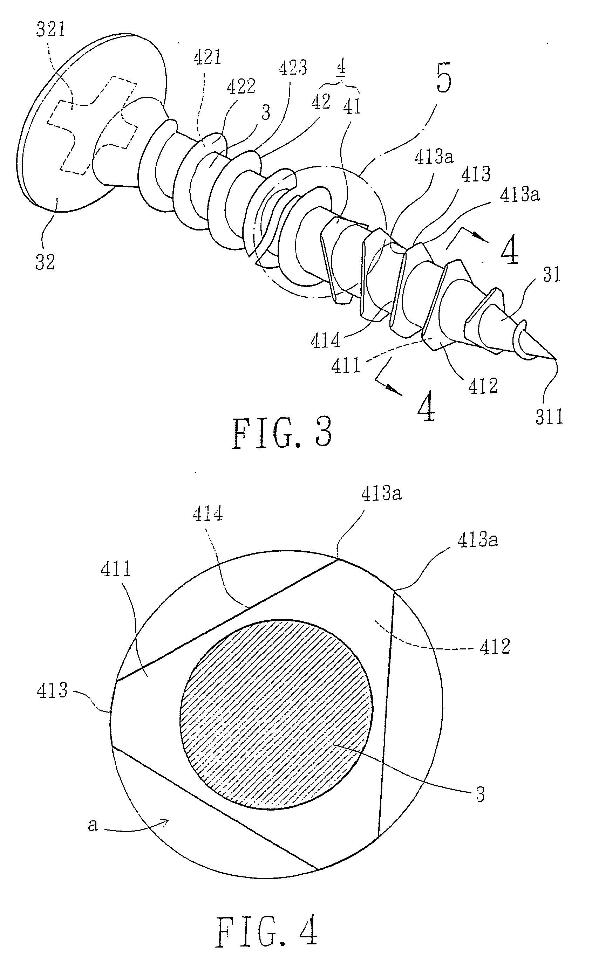

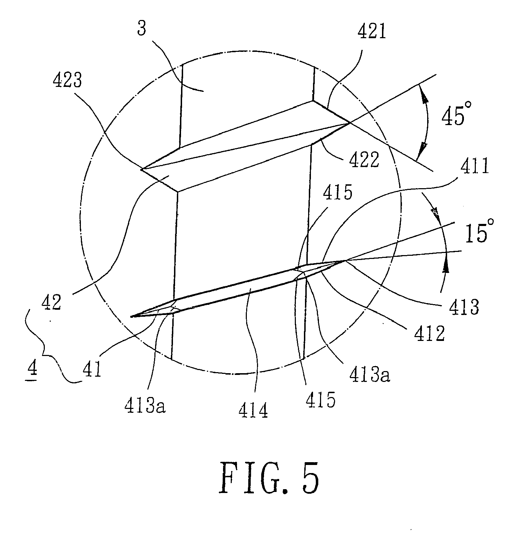

A screw according to the preferred teachings of the present invention is shown in Figs. 3-5 and includes a shank 3 and a threaded portion 4. The shank 3 is substantially cylindrical and includes a conic section 31 on an end thereof and a head 32 formed on the other end thereof. The conic section 31 includes a point 311 at a distal end thereof. In use, the point 311 is pressed against a surface of an object (not shown) for boring purposes. The head 32 includes a groove 321 in a top face thereof for receiving a tool (not shown) such as a screwdriver. The shank 3 is turned when the tool is coupled with the groove 321 and turned. The groove 321 may be rectilinear, cruciform, or polygonal.

With reference to Figs. 3 and 4, the threaded portion 4 can be integrally formed on a circumference of the shank 3 by tapping, pressure molding, or casting. The threaded portion 4 extends from the conic section 31 to the head 32 and cuts/screws into the object to drive the shank 3 into the object when the shank 3 is driven by a tool. The threaded portion 4 includes a first thread part 41 extending helically on the circumference of the shank 3 and a second thread part 42 extending helically between the head 32 and the first thread part 41. The first and second thread parts 41 and 42 form a threaded portion 4 with a uniform pitch. The second thread part 42 is contiguous to an end of the first thread part 41. Alternatively, the second thread part 42 is adjacent to but spaced from the first thread part 41.

With reference to Figs. 3 to 5, the first thread part 41 includes a first flank 411 facing the head 32 and a second flank 412 facing away from the head 32. The first flank 411 extends toward the conic section 31 at an acute angle with the shank 3 whereas the second flank 412 extends toward the head 32 at an acute angle with the shank 3. A plurality of blade sections 413 and rectilinear chamfered sections 414 are disposed alternately along an outer edge of the first thread part 41. The blade section 413 is a ridge where the first flank 411 intersects the second flank 412, and an angle between the first and second flanks 411 and 412 of the first thread part 41 is between 5° and 30° to provide a sharp blade section 413. In the illustrated embodiment, the angle between the first and second flanks 411 and 412 of the first thread part 41 is 15°. Each of two ends of each rectilinear chamfered section 414 includes two acutely angled sides 415 meeting at an apex 413a which is located at one end of the adjacent blade sections 413. The blade section 413 thereby provides a predetermined width between two adjacent apexes 413a positioned at two ends of the blade section 413.

The second thread part 42 includes a first flank 421 facing the head 32 and a second flank 422 facing away from the head 32 and intersecting the first flank 32 at a ridge 423 that is spaced from the circumference of the shank 3 and that extends helically. The first flank 421 extends toward the conic section 31 at an acute angle with the shank 3 whereas the second flank 422 extends toward the head 32 at an acute angle with the shank 3. An angle between the first and second flanks 421 and 422 of the second thread part 42 is between 30° and 60°. In the illustrated embodiment, the angle between the first and second flanks 421 and 422 of the second thread part 42 is 45° to provide a thicker thread structure with enhanced structural strength.

The screw according to the preferred teachings of the present invention is suitable for use with objects made of wood or plastic. In use, the conic section 311 of the shank 3 is pressed against a surface of an object, and a tool is then inserted into the groove 321 of the head 32. The conic section 311 is driven into the object when the shank 3 is turned by turning the tool. At this time, the first thread part 41 is screwed into the object. Since the angle between the first and second flanks 411 and 412 of the first thread part 41 is smaller and since the sharp apexes 413 a between the blade sections 413 and rectilinear chamfered sections 414 have excellent cutting ability, the shank 3 can be rapidly driven into the object by the first thread part 41. Furthermore, because of the existence of a space "a" defined between each rectilinear chamfered section 414 and an inner periphery defining the bore drilled by the screw, scrap generated during screwing of the first thread part 41 can be received in the spaces "a".

After the first thread part 41 has completely screwed into the object, a groove (not shown) having a thickness approximately the same as that of the first thread part 41 is formed in the object. By means of the groove pregenerated by the first thread part 41, the second thread part 42 enters the object along the groove with a reduced resistance. Thus, the second thread part 42 rapidly and easily enters the object for further screwing purposes. Since the thickness of the second thread part 42 is greater than that of the first thread part 41, the pull-resistant strength is increased after the second thread part 42 is engaged in the groove in the object. As a result, the coupling strength between the object and the screw according to the preferred teachings of the present invention is enhanced, preventing the screw from being removed by forcibly pulling the screw.

The level of the predetermined width of each blade section 413 of the first thread part 41 is suitable and two ends of each blade section 413 are supported by a pair of adjacent rectilinear chamfered sections 414. Namely, the structural strength of each blade section 413 is increased to avoid damage while screwing the first thread part 41 into the object. Furthermore, the sharp apexes 413 a located at two ends of each blade section 413 allow efficient operations of driving the screw according to the preferred teachings of the present invention into or out of the object.

As apparent from the foregoing, the problems of conventional screws are solved by the screw according to the preferred teachings of the present invention that includes first and second thread parts 41 and 42, wherein the first thread part 41 includes a plurality of blade sections 413 and a plurality of rectilinear chamfered sections 414 to allow fast screwing. The rectilinear chamfered sections 414 provide large scrap receiving spaces, reduce frictional area between the screw and the object, and enhance the structural strength of the thread sections 413, thereby further enhancing the screwing efficiency and prolonging the life of the screw according to the preferred teaching of the present invention.

While the principles of this invention have been disclosed in connection with specific embodiments, it should be understood by those skilled in the art that these descriptions are not intended to limit the scope of the invention, and that any modification and variation without departing the spirit of the invention is intended to be covered by the scope of this invention defined only by the appended claims.

## Claims

1. A screw comprising:
a shank including a conic section on a first end thereof and a head formed on a second end thereof;
a first thread part extending helically on a circumference of the shank, with the first thread part comprising a plurality of blade sections and rectilinear chamfered sections disposed alternately along an outer edge of the first thread part, ; and
a second thread part extending helically on the circumference of the shank between the head and the first thread part.

2. The screw as claimed in claim 1, with each of the plurality of rectilinear chamfered sections including two ends each having two acutely angled sides meeting an apex that is located at one end of the blade sections.

3. The screw as claimed in claim 1, wherein the first thread part extends helically adjacent to the conic section.

4. The screw as claimed in claim 1, with a space being defined between each of the plurality of rectilinear chamfered sections and an inner periphery defining a bore of an object into which the screw is driven.

5. The screw as claimed in claim 1, with the head including a groove adapted for engaging with a tool.

6. The screw as claimed in claim 1, with the first and second thread parts forming a threaded portion having a uniform pitch.

7. The screw as claimed in claim 1, wherein the first thread part comprises a first flank facing the head and a second flank facing away from the head with the first and second flanks of the first thread part having a first angle therebetween, with the second thread part comprising a third flank facing the head and a fourth flank facing away from the head, with the third and fourth flanks of the second thread part having a second angle therebetween and not equal to the first angle.

8. The screw as claimed in claim 7, with the first angle of the first thread part being between 5° and 30°.

9. The screw as claimed in claim 7, with the second angle of the second thread part being between 30° and 60°.

10. The screw as claimed in claim 2, wherein the first thread part comprises a first flank facing the head and a second flank facing away from the head with the first and second flanks of the first thread part having a first angle therebetween, with the second thread part comprising a third flank facing the head and a fourth flank facing away from the head, with the third and fourth flanks of the second thread part having a second angle therebetween and not equal to the first angle.

11. The screw as claimed in claim 10, with the first angle of the first thread part being between 5° and 30°.

12. The screw as claimed in claim 10, with the second angle of the second thread part being between 30° and 60°.
